# EUROPEAN PATENT APPLICATION

(11) **EP 2 042 588 A1**
(43) Date of publication of application: **01.04.2009**
(21) Application number: 07425579.5
(22) Date of filing: 21.09.2007
(51) Int. Cl.: C11C 3/00, B01J 21/06, B01J 21/12, C10L 1/02

(54) **Process for the esterification and transesterification of fats**

(71) Applicant: UNIVERSITA' DEGLI STUDI DI MILANO, 20122 Milano (IT); CONSIGLIO NAZIONALE DELLE RICERCHE, 00185 Roma (IT)
(72) Inventor: Psaro, Rinaldo, 20090 Segrate (MI) (IT); Zacheria, Federica c/o Universita'Degli Studi Di Milano, 20122 Milano (IT); Ravasio, Maria Nicoletta, 10121 Segrate (MI) (IT)
(74) Representative: Long, Giorgio

(57) **Abstract**

The present invention relates to a process for the esterification and transesterification of fats, particularly fats with high levels of acidity.

In particular, the present invention relates to a fat esterification and/or transesterification process, comprising at least one step of reacting said fats in a solvent in the presence of a catalyst based on ZrO₂ or Al₂O₃ on silica at a temperature comprised of between 100°C and 250°C, wherein, in said catalyst based on ZrO₂ or Al₂O₃ on silica, ZrO₂ is present in quantities of less than 15% by weight, essentially in the absence of any other oxides aside from the silica, or Al₂O₃ is present in quantities of less than 15% by weight, and preferably less than 13% by weight, essentially in the absence of any other oxides aside from the silica.

## Description

### Application field of the invention

The present invention relates to a process for the esterification and transesterification of fats, particularly fats with high levels of acidity.

### State of the art

Biodiesel is currently mainly produced through the transesterification of triglycerides with MeOH, using NaOH as a basic catalyst. This catalyst is not only corrosive to equipment but also reacts with any free acids present to form soaps, which are emulsifiers, and hence make the separation of the methanol phase containing the glycerol from the lipid phase containing the product more difficult.

Furthermore, even in the absence of free acidity, the glycerol produced contains from 5 to 40% water, by weight, and is contaminated with the salts derived from neutralising the alkaline catalyst (3-6% by weight) and is thus of poor quality.

A heterogeneous transesterification catalyst would thus resolve the problem of the production of high purity glycerin.

Furthermore, the use of refined vegetable oils (hence with low acidity) has a significant impact on the cost of biofuel; indeed, currently, the cost of raw materials affects 85% of the cost of biodiesel. It would thus be advantageous to use high acidity vegetable or animal oils as raw material. Also, such oils and fats are not part of the food sector, and so increased demand for energy purposes would not result in increased prices for products destined for human consumption (see the FAO report: Sustainable Bioenergy: a framework for decision makers, UN April 2007).

In the case oils with high free acid and water content, for example, in the case of spent frying oils, homogeneous acid catalysis is normally used (H₂SO₄, H₃PO₄, HCl, p-toluenesulphonic acid, BuSn(OH)₃, Al(OR)₃) which however requires a distillation process for the water formed, recycling of the excess alcohol, longer reaction times and purification of the esters produced.

In recent years, numerous heterogeneous catalytic systems, both acidic and basic, have been proposed including zeolytes, ion exchange resins, hydrotalcites, metal oxides, potassium salts supported on Al₂O₃ and other oxides.

For example, EP-B-O 198 243 relates to the use of a mixed Al₂O₃-Fe₂O₃ catalyst, but the bed dimensions and the spatial rate indicated would require a reactor of at least 150 m³. Furthermore, the high reaction temperature (280-320°C) would result in degradation of the glycerol and consequently, very low yield of this product.

Patent US-A-5 908946 described a process that can operate continuously or discontinuously, using solid catalysts, i.e. ZnO, a mixture of ZnO and Al₂O₃, a zinc aluminate.

Patent publication FR 2 869 612 A1 uses mixtures of ZnO and TiO₂ or ZnO/TiO2/Al2O3 mixtures, preferably between 150 and 250°C and a pressure of between 10 and 70 bar.

Patent US A 5 169 822 describes the deposition, in non-aqueous solvent, of titanium alkoxides on inorganic supports.

Patent publication WO 2006/094986 A1 describes the use of catalysts made of titanium oxide on silica supports, active at 150 and 250°C, that can be used in the transesterification of soya oil, even in the presence of a certain concentration of water (<10,000 ppm). However, the activity of such catalysts is significantly reduced in the presence of 5% free acids, while they are completely inactive at eliminating free acidity.

It has also been reported that the order of activity for a series of solid catalysts for the transesterification of crude palm oil is sulphated ZrO₂ > sulphated SnO₂ > ZnO > KNO₃/ZrO₂ > KNO_{3/}zeolyte KL > ZrO₂. The sulphated ZrO₂ system can give up to 90.3% yield in methyl esters, with a methanol/oil ratio equal to 6, at 200°C and 50 bar for 4 hours.

Patent publication EP 1 640 356 A1 provides a method for the transesterification of fats with acid content between 1 and 30% in the presence of a catalyst comprising an amorphous oxide of Zr (10-99% by weight, with respect to the weight of the catalyst) and a group III, IV o V oxide, particularly ZrO₂/TiO₂, ZrO₂/SiO₂, ZrO₂/PO₄ and ZrO₂/Al₂O₃. Such catalysts preferably work between 150 and 350°C at pressures preferably between 1 and 40 atmospheres.

### Summary of the invention

It has now been unexpectedly found that silica modified with a small quantity of ZrO₂ (a group IV oxide) or Al₂O₃ (a group III oxide) is active in the esterification and/or transesterification of oils, containing even high quantities of free fatty acids, even at temperatures below 200°C.

The object of the present invention is a process that, thanks to the particular catalyst used, allows the transesterification of a refined oil, the esterification of a mixture of free fatty acids or the esterification of the free fatty acids in an oil with low or medium acidity, and at the same time, the partial transesterification of the triglyceride fraction.

The process of the invention allows access, for the production of biodiesel, to an enormous range of fats as starting products, such as:
tallow, lard and other non-edible rendered fats (5,000 million tons (Mt)/year in the USA)
spent frying oils (estimated at 0.7-1 Mt per year in Europe)
tobacco oil
nahar (*Mesua ferrea*) seed oil
mahua oil (*Madhuca indica* seed, 19% FFA)
rubber seed oil
salmon oil (25% FFA)
general fish oil
tall oil (100% FFA)
palm fatty acids (85% FFA)
olive olein (65% FFA)
seed olein

### Detailed description of the invention

The catalysts used for the purposes of the present invention are based on ZrO₂ or Al₂O₃ on silica. By the term "catalysts based on ZrO₂ on silica" is meant catalysts where ZrO₂ is present in quantities less than 15% by weight, essentially in the absence of any other oxides, aside from silica. By the term "catalysts based on Al₂O₃ on silica" is meant catalysts where Al₂O₃ is present in quantities less than 15% by weight, preferably less than or equal to 13% by weight, essentially in the absence of any other oxides, aside from silica.

By the expression "essentially in the absence of any other oxides aside from silica", is meant that the catalyst does not contain any other oxides in such quantities as to be able to influence the activity of the catalyst. The presence of impurities, in trace amounts, or in any case quantities ineffective at modifying the activity of the catalyst, is not excluded.

Such catalysts are commercially available (obtainable for example from Grace Davison, Worms (D)) or may be prepared according to conventional methods known to those skilled in the art.

The preferred catalysts according to the present invention have the following composition and the following characteristics:
Al₂O₃ 0.3-5.0% on silica, surface area (BET) = 200-600 m²/g, pore volume PV= 0.6-2.0 ml/g, mean pore diameter = 40-150 A;
ZrO₂ 0.5-7% on silica, surface area (BET) = 200-600 m²/g, pore volume PV= 0.6-2.0 ml/g, mean pore diameter = 40-150 A.

More preferably, the catalysts of the invention have the following composition:
catalyst A: 0.56% Al₂O₃ on SiO₂, surface area (BET) = 487 m²/g, pore volume PV = 1.43 ml/g, mean pore diameter = 117 A
catalyst B: 4.7% ZrO₂ on SiO₂, surface area (BET) = 304 m²/g, pore volume = 1.62 ml/g; mean pore diameter = 106 A.

The esterification (deacidification) and transesterification reaction according to the present invention is conducted by reacting the fat with an alcohol in the presence of a ZrO₂ or Al₂O₃ based catalyst on a silica support.

The reaction is preferably conducted in an autoclave and at a temperature of between 100°C and 250°C, preferably between 120°C and 220°C, more preferably between 150°C and 190°C. Under such conditions, the reaction will be conducted under pressure, the extent of which is strictly correlated with the reaction temperature according to physical laws, well known to those skilled in the art. Considering the temperature used in the present process, the pressure will generally be between 6 and 30 atm, more particularly between 15 and 20 atm.

The reaction time varies according to the starting substrate, the temperature and the catalyst used, and are generally between 1 and 30 hours.

Catalysts based on ZrO₂ or Al₂O₃ on silica are preferably used in quantities comprised of between 2% and 20% by weight with respect to the starting product, more preferably between 5% and 15% by weight.

Preferably, the catalyst is subjected to thermal pre-treatment at a temperature of less than 400°C, preferably at a temperature comprised of between 230°C and 320°C, more preferably at a temperature comprised of between 260°C and 280°C. Said pre-treatment may comprise a first step at atmospheric pressure and a second step under vacuum and may be continued for a period of time greater than 20 minutes, and generally less than 2 hours.

The pre-treatment allows the removal of humidity absorbed onto the catalyst and makes the surface more active. Any other treatment other than thermal treatment that might give the same effect will be equally useful.

It has been found that at temperatures in excess of 400°C, particularly 450°C and higher, the catalyst undergoes changes that reduce the activity.

The alcohol used acts as both solvent and reagent, and is generally a lower alcohol, particularly methanol or ethanol. The alcohol is used in a molar excess (with respect to the starting product) of at least 3:1, preferably at least 6:1, or in a molar excess of at least 10:1, preferably at least 15:1, depending on the starting product and the catalyst used, as well as the size of the reactor.

Thanks to the catalysts used, the process of the invention allows the attainment of both the esterification of the fatty acids present in the substrate (thus reducing the level of acidity of the final biodiesel), and the partial conversion of the triglycerides by transesterification. To obtain a high quality biodiesel, it is essential the residual acidity be less than 1% by weight. However, it is likewise important that the reaction may be conducted at not excessively high temperatures, both for reasons of process cost (less energy used), and for reasons of safety (high temperature means high pressure). Hence, when the percentage of acids in the starting product is particularly high (for example greater than 20% by weight, products SM4, SM5 and SM6 in table I), it may be convenient to conduct the process in two steps, repeating the reaction on already reacted product, so as to reduce the percentage of acids to below 1% by weight. For example, this may be obtained by placing two reactors in series, where the input for the second reactor is the output from the first. Said procedure will generally be preferred with respect to the alternative of operating in a single step, but at a higher temperature, for the reasons already mentioned.

The invention will now be further described by means of several example embodiments, without any intention of limitation with respect to the scope of the invention as defined in the appended claims.

### Example 1

### Transesterification reaction of rape seed oil with catalyst A

2.5 g of catalyst A is treated at 270°C for 30 minutes and then under vacuum at the same temperature in a glass reactor. Following said treatment, 25 ml (22.75 g) of rape seed oil for food use, having the composition indicated in table I with the reference initials SM1, is added and the mixture transferred to a steel (AISI 316) autoclave. 30 ml (23.7 g, approx. 13:1 in moles) of anhydrous MeOH is added. The autoclave is sealed under 1 bar of inert gas (N₂) and the temperature adjusted to 160°C (P = 19 bar), and the reaction mass stirred. After 20 hours, the autoclave is cooled, the reaction mixture filtered and the lipid phase separated. The resulting product is analysed by GC according to the method in UNI 22053:1996. The results are reported in Table I.

### Example 2

### Deacidification and transesterification reaction of an acid oil with catalyst A.

This has been carried out as for example 1 except that a mixture of rape seed oil and approx. 5% w/w oleic acid, having the composition indicated in table I with the reference initials SM2, has been used. The free fatty acid percentage before and after the reaction has been determined by titration with KOH, using phenolphthalein as an indicator. The results are reported in table I.

### Example 3

### Deacidification and transesterification reaction of an acid oil with catalyst A.

This has been carried out as for example 2 except that a mixture of rape seed oil and approx. 10% w/w oleic acid, having the composition indicated in table I with the reference initials SM3, has been used. The results are reported in table I.

### Example 4

### Deacidification and transesterification reaction of an acid oil with catalyst A.

This has been carried out as for example 2 except that a mixture of rape seed oil and approx. 20% w/w oleic acid, having the composition indicated in table I with the reference initials SM4, has been used. The results are reported in table I.

### Example 5

### Deacidification and transesterification reaction of an acid oil with catalyst A.

This has been carried out as for example 2 except that a mixture of fatty acids from olives (olive olein) having the composition indicated in table I with the reference initials SM5, has been used. The results are reported in table I.

### Example 6

### Esterification reaction of Tall Oil with catalyst A

This has been carried out as in example 2 except that Tall Oil, having the composition indicated in table I by the reference initials SM6, has been used. The results are reported in table I.

### Example 7

### Transesterification reaction of rape seed oil with catalyst B

This has been carried out as in example 1 except that catalyst B has been used. The results are reported in table I.

### Example 8

### Transesterification reaction of rape seed oil with catalyst B

This has been carried out as in example 1 except that the reaction has been analysed after 6 hours. The results are reported in table I.

### Example 9

### Transesterification reaction of rape seed oil with catalyst B

This has been carried out as in example 1 except that 15 ml of MeOH (10.75 g, approx. 6:1 in moles) have been used and the reaction has been analysed after 20 hours. The results are reported in table I.

### Example 10

### Transesterification reaction of rape seed oil with catalyst B

This has been carried out as in example 9, except that reaction has been conducted at 180°C and analysed after 6 hours. The results are reported in table I.

### Example 11

### Deacidification and transesterification reaction of an acid oil with catalyst B.

This has been carried out as in example 2 except that catalyst B has been used. The results are reported in table I.

### Example 12

### Deacidification and transesterification reaction of an acid oil with catalyst B.

This has been carried out as in example 11, except that the reaction time has been 2 hours. The results are reported in table I.

### Example 13

### Deacidification and transesterification reaction of an acid oil with catalyst B.

This has been carried out as in example 11, except that the temperature has been 180°C and the reaction time 1 hour. The results are reported in table I.

### Example 14

### Deacidification and transesterification reaction of an acid oil with catalyst B.

This has been carried out as in example 3 except that catalyst B has been used. The results are reported in table I.

### Example 15

### Deacidification and transesterification reaction of an acid oil with catalyst B.

This has been carried out as in example 4 except that catalyst B has been used. The results are reported in table I.

### Example 16

### Deacidification and transesterification reaction of an acid oil with catalyst B.

This has been carried out as in example 5 except that catalyst B has been used. The results are reported in table I.

### Example 17

### Esterification reaction of Tall Oil with catalyst B

This has been carried out as in example 6 except that catalyst B has been used. The results are reported in table I.

### Example 18 (COMPARATIVE)

### Transesterification reaction of rape seed oil without catalyst

This has been carried out as in example 8, but in the absence of catalyst. The results are reported in table I.

**TABLE I**

| Example | Starting material/ product | Cat. | Me-esters | Mono-glycerides | Di-glycerides | Tri-glycerides | Acids |
|---|---|---|---|---|---|---|---|
| | | | %weight | %weight | %weight | %weight | %weight |
| 1 | Product SM1 | A | | | | 100 | |
| | | | 45.2 | 7.0 | 16.8 | 30 | |
| 2 | Product | A | | | | 94.4 | 5.6 |
| | SM2 | | 44.2 | 4.7 | 23.3 | 26.8 | 0.7 |
| 3 | Product | A | | | | 86 | 14.6 |
| | SM3 | | 48.1 | 6.6 | 18.2 | 26 | 0.8 |
| 4 | Product | A | | | | 78.4 | 21.6 |
| | SM4 | | 65.20 | 8.0 | 15.9 | 9.9 | 2.8 |
| 5 | Product | A | | | | 41.6 | 58.4 |
| | SM5 | | N.D. | N.D. | N.D. | N.D. | 4.7 |
| 6 | Product | A | | | | 1.9 | 98.1 |
| | SM6 | | N.D. | N.D. | N.D. | N.D. | 6.1 |
| 7 | Product | B | | | | 100 | |
| | SM1 | | 81 | 3.7 | 4.3 | 10.3 | |
| 8 | Product | B | | | | 100 | |
| | SM1 | | 56.2 | 3.3 | 10.3 | 29.2 | |
| 9 | Product | B | | | | 100 | |
| | SM1 | | 77.4 | 2.7 | 5.6 | 13.3 | |
| 10 | Code SM1 | B | | | | 100 | |
| | | | 81.6 | 3.3 | 4.1 | 10.0 | |
| 11 | Product | B | | | | 93.5 | 6.5 |
| | SM2 | | 83.2 | 3.0 | 4.4 | 8.3 | 0.7 |
| 12 | Code SM2 | B | | | | 94.5 | 5.5 |
| | | | 32.0 | 1.0 | 8.7 | 56.7 | 0.4 |
| 13 | Code SM2 | B | | | | 94.4 | 5.6 |
| | | | 46.0 | 2.2 | 9.5 | 41.24 | 0.3 |
| 14 | Product | B | | | | 90 | 9.2 |
| | SM3 | | 84.1 | 3.2 | 3.5 | 8.2 | 1.1 |
| 15 | Product | B | | | | 77.6 | 22.4 |
| | SM4 | | 84.6 | 1.9 | 3.8 | 8.6 | 1.3 |
| 16 | Product | B | | | | 41.6 | 58.4 |
| | SM5 | | N.D. | N.D. | N.D. | N.D. | 5.4 |
| 17 | Product | B | | | | 1.9 | 98.1 |
| | SM6 | | N.D. | N.D. | N.D. | N.D. | 5.3 |
| 18 | Code SM1 | None | 5.0 | 0.1 | 6.7 | 100 | |
| | | | | | | 87.2 | |

| | | | | | | | |
|---|---|---|---|---|---|---|---|
| N.D.: Not determined | | | | | | | |

Examples 12 and 13 highlight how a treatment of 2 hours at 160°C or 1 hour at 180°C in the presence of the catalysts of the present invention allow reducing acidity from approx. 5% to less than 1% by weight. This way it will thus be possible to obtain a product that might be amenable to the conventional transesterification process in alkali in homogeneous phase without the formation of soaps and problems associated with separation of the glycerol. Furthermore, at the same time, there is good conversion of the triglycerides with consequent savings of catalyst and/or alcohols in the second stage.

## Claims

1. A fat esterification and/or transesterification process, comprising at least one step of reacting said fat in a solvent in the presence of a catalyst based on ZrO₂ or Al₂O₃ on silica at a temperature comprised of between 100°C and 250°C, wherein, in said catalyst based on ZrO₂ or Al₂O₃ on silica, ZrO₂ is present in quantities of less than 15% by weight, essentially in the absence of any other oxides aside from the silica, or Al₂O₃ is present in quantities of less than 15% by weight, essentially in the absence of any other oxides aside from the silica.

2. The process according to claim 1, wherein, in said catalyst based on Al₂O₃ on silica, Al₂O₃ is present in quantities of less than 13% by weight.

3. The process according to claims 1 or 2, wherein said catalyst based on ZrO₂ or Al₂O₃ on silica is selected from catalysts having the following compositions and physical characteristics: 0.3-5.0% Al₂O₃ on silica, surface area (BET) = 200-600 m²/g, pore volume PV = 0.6-2.0 ml/g, mean pore diameter = 40-150 A; 0.5-7% ZrO₂ on silica, surface area (BET) = 200-600 m²/g, pore volume PV =0.6-2.0 ml/g, mean pore diameter = 40-150 A.

4. The process according to claim 3, wherein said catalyst is selected from: catalyst A: 0.56% Al₂O₃ on SiO₂, surface area (BET) = 487 m²/g, pore volume PV = 1.43 ml/g, mean pore diameter = 117 A; or catalyst B: 4.7% ZrO₂ on SiO₂, surface area (BET) = 304 m²/g, pore volume = 1.62 ml/g; mean pore diameter = 106 A.

5. The process according to any of the claims 1 to 4, wherein said catalyst is used in quantities comprised of between 2% and 20% by weight with respect to the starting product, preferably between 5% and 15% by weight.

6. The process according to any of the claims 1 to 5, wherein said catalyst is subjected to thermal pre-treatment at a temperature of less than 400°C.

7. The process according to claim 6, wherein said catalyst is subjected to thermal pre-treatment at a temperature comprised of between 230°C and 320°C, preferably between 260°C and 280°C.

8. The process according to claims 6 or 7, wherein said thermal pre-treatment may comprise a first step at atmospheric pressure and a second step under vacuum, and may be continued for a period of time greater than 20 minutes and less than 2 hours.

9. The process according to any of the claims 1 to 8, wherein said process is conducted at a temperature comprised of between 120°C and 220°C, preferably between 150°C and 190°C.

10. The process according to any of the claims 1 to 9, wherein the reaction time is comprised of between 1 and 30 hours.

11. The process according to any of the claims 1 to 10, wherein said solvent is an alcohol, preferably selected from methanol and ethanol.

12. The process according to claim 11, wherein said alcohol is used in a molar excess, with respect to the fat, of at least 3:1, preferably at least 6:1, or in a molar excess of at least 10:1, preferably at least 15:1.

13. The process according to any of the claims 1 to 12, wherein said fats are selected from: tallow, lard and other non-edible rendered fats; spent frying oils; tobacco oil; nahar (*Mesua ferrua*) seed oil; mahua oil (*Madhuca indica*); rubber seed oil; salmon oil; general fish oils; tall oil; palm fatty acids; olive olein; seed olein; or mixtures thereof.

14. The process according to any of the claims 1 to 13, comprising at least two steps of reacting said fats in a solvent in the presence of a catalyst based on ZrO₂ or Al₂O₃ on silica at a temperature comprised of between 100°C and 250°C.

15. The process according to claim 14, wherein said at least two steps of reacting said fats in a solvent in the presence of a catalyst based on ZrO₂ or Al₂O₃ on silica at a temperature comprised of between 100°C and 250°C are conducted in reactors placed in series.
